# EUROPÄISCHE PATENTANMELDUNG

(11) **EP 2 434 606 A1**
(43) Veröffentlichungstag der Anmeldung: **28.03.2012**
(21) Anmeldenummer: 10178352.0
(22) Anmeldetag: 22.09.2010
(51) Int. Cl.: H02J 3/18, H05B 7/144

(54) **Elektrische Anlage für einen Lichtbogenofen**

(71) Anmelder: SIEMENS AKTIENGESELLSCHAFT, 80333 München (DE)
(72) Erfinder: Welker, Hans-Herbert, 91074, Herzogenaurach (DE)

(57) **Zusammenfassung**

Die Erfindung betrifft eine elektrische Anlage eines Lichtbogenofens zum Schmelzen von Metallen, umfassend einen Blindleistungskompensator und eine Steuereinheit zur Ansteuerung des Blindleistungskompensators, wobei zumindest ein Steuerungsparameter innerhalb eines vorgegebenen Steuerungsparameter-Bereichs veränderbar ist. Dabei ist für den Steuerungsparameter ein eingeschränkter Steuerungsparameter-Teilbereich vorgegeben und die elektrische Anlage umfasst eine Bedieneinheit, mittels welcher der Steuerungsparameter innerhalb des Steuerungsparameter-Teilbereichs einstellbar ist. Damit erhöht sich die Flexibilität der elektrischen Anlage und der Betreiber hat gegenüber bekannten Ausführungen mehr Handlungsspielraum bezüglich des Betriebs und der Wartung seiner Anlage.

## Beschreibung

Die Erfindung betrifft eine elektrische Anlage eines Lichtbogenofens zum Schmelzen von Metallen, umfassend einen Blindleistungskompensator und eine Steuereinheit zur Ansteuerung des Blindleistungskompensators, wobei zumindest ein Steuerungsparameter innerhalb eines vorgegebenen Steuerungsparameter-Bereichs veränderbar ist.

Ein Lichtbogenofen dient der Herstellung von Flüssigmetall, üblicherweise Stahl. Aus einem elektrischen Versorgungsnetz wird mittels einer elektrischen Anlage die erforderliche hohe elektrische Energie bereitgestellt. Systembedingt kann es dabei zu unerwünschten Rückwirkungen in das Versorgungsnetz kommen. Die elektrische Anlage umfasst deshalb zumindest einen Blindleistungskompensator (SVC = static VAR compensator), bestehend in der Regel aus einem TCR (thyristor controlled ractance) und mindestens einem statischen Filterkreis. Die Ansteuerung des TCR erfolgt mittels einer Steuereinheit.

Der Blindleistungskompensator dient dazu, Blindleistungskomponenten eines versorgenden Wechselstromnetzes zu kompensieren. Dabei ist es wichtig, von der elektrischen Anlage verursachte Netzstörungen genau zu erfassen und den Blindleistungskompensator entsprechend anzupassen. Zu diesem Zweck ist in der Regel zumindest ein Steuerungsparameter innerhalb eines vorgegeben Steuerungsparameter-Bereichs veränderbar. Nach dem Stand der Technik geschieht die Anpassung des Blindleistungskompensators während der Inbetriebnahme einer Anlage. Nachträgliche Änderungen sind nur durch einen geschulten Servicetechniker über einen eingeschränkten Zugriff auf die Steuereinheit möglich. Ansonsten laufen die Teile der elektrischen Energieanlage, welche während einer Inbetriebsetzung einstellbar sind, im Hintergrund, ohne weitere Eingriffsmöglichkeiten seitens des Betreibers.

Der Erfindung liegt die Aufgabe zugrunde, für eine elektrische Anlage der eingangs genannten Art eine Verbesserung gegenüber dem Stand der Technik anzugeben.

Erfindungsgemäß wird diese Aufgabe gelöst durch den Gegenstand des Anspruchs 1 und durch ein Verfahren gemäß Anspruch 12. Weiterbildungen finden sich in den abhängigen Ansprüchen.

Vorgesehen ist demnach eine elektrische Anlage eines Lichtbogenofens zum Schmelzen von Metallen, umfassend einen Blindleistungskompensator und eine Steuereinheit zur Ansteuerung des Blindleistungskompensators, wobei zumindest ein Steuerungsparameter innerhalb eines vorgegebenen Steuerungsparameter-Bereichs veränderbar ist und wobei des Weiteren für den Steuerungsparameter ein eingeschränkter Steuerungsparameter-Teilbereich vorgegeben ist und die elektrische Anlage eine Bedieneinheit umfasst, mittels welcher der Steuerungsparameter innerhalb des Steuerungsparameter-Teilbereichs einstellbar ist. Auf diese Weise kann durch den Anlagenbetreiber während des laufenden Betriebs eine Veränderung des Anlagenverhaltens herbeigeführt werden. Das ist vor allem dann sinnvoll, wenn sich die Anforderungen an die Anlage verändern. Beispielsweise wird kurzfristig eine höhere Leistung gefordert oder der Verschleiß einzelner Anlagenkomponenten soll gesenkt werden.

Vorteilhafterweise ist die Steuereinheit auch zur Regelung von Elektroden des Lichtbogenofens eingerichtet. Dabei ist es günstig, wenn zumindest ein Regelungsparameter innerhalb eines vorgegebenen Regelungsparameter-Bereichs veränderbar ist und mittels Bedieneinheit innerhalb eines eingeschränkten Regelungsparameter-Teilbereichs einstellbar ist. Der Betreiber wird damit in die Lage versetzt, die Regelung der Elektroden zu beeinflusse.

Des Weiteren ist es von Vorteil, wenn die Steuereinheit zur Ansteuerung eines Ofenschalters des Lichtbogenofens eingerichtet ist. Auch hier ist es günstig, zumindest einen Schaltparameter vorzusehen, der innerhalb eines vorgegebenen Schaltparameter-Bereichs veränderbar ist und mittels Bedieneinheit innerhalb eines eingeschränkten Schaltparameter-Teilbereichs einstellbar ist.

Betreffend die Einstellmöglichkeiten ist es günstig, wenn einzelnen Parameter zumindest zum Teil voneinander abhängig sind. Auf diese Weise können einzelne Teile der elektrischen Anlage aufeinander abgestimmt werden. Die Beeinflussung eines Parameters, der einen Anlagenteil belastet, zieht dann beispielsweise die Veränderung eines anderen Parameters nach sich, welcher eine Entlastung des betreffenden Anlagenteils bewirkt.

Zur einfachen Bedienbarkeit ist vorgesehen, dass die Bedieneinheit einen Schieberegler umfasst, mittels dem die voneinander abhängigen Parameter einstellbar sind. Dabei ist es günstig, wenn die elektrische Anlage eine Anzeigeeinheit umfasst, mittels der eingestellte Werte für einzelne Parameter ablesbar sind.

In einer vorteilhaften Ausprägung der Erfindung erstreckt sich der jeweilige Teilbereich, innerhalb dem der jeweilige Parameter mittels Bedieneinheit einstellbar ist, über höchsten 10% des gesamten jeweiligen Parameterbereichs. Damit ist sichergestellt, dass der Betreiber die Anlage nur innerhalb enger Grenzen beeinflussen kann. Ein Betreiben der Anlage außerhalb sinnvoller Betriebsgrenzen wird vermieden. Es sind keine Änderungen möglich, die zu einer Betriebsstörung führen könnten.

Generell ist es von Vorteil, wenn die elektrische Anlage eine Aufzeichnungseinheit umfasst, mittels der mechanische und/oder elektrische Beanspruchungen einzelner Anlagenkomponenten erfassbar sind. Es wird ein Protokoll der Anlagenzustände erstellt und bei Bedarf ausgewertet, um auf den Verschleiß einzelner Anlagenkomponenten zu schließen.

In einer Weiterentwicklung umfasst die elektrische Anlage eine Wartungsanzeige, mittels der Wartungsintervalle von mechanisch und/oder elektrisch beanspruchten Anlagenkomponenten in Abhängigkeit von mittels Bedienelement vorgenommenen Parametereinstellungen darstellbar sind. Mit einer solchen Wartungsintelligenz kann der Betreiber die Dauer bis zur nächsten Wartung bzw. bis zum Austausch eines Verschleißteils abschätzen.

Ein entsprechendes Verfahren sieht vor, dass mittels der Aufzeichnungseinheit die Belastung zumindest einer mechanisch und/oder elektrisch beanspruchten Anlagenkomponente erfasst wird, dass die Belastung dieser Anlagenkomponente durch das Einstellen einzelner Parameter beeinflusst wird und dass nach jeder Neueinstellung dieser Parameter eine Neuberechnung der noch verbleibenden Zeit bis zum Ende des aktuellen Wartungsintervalls der Anlagenkomponente erfolgt.

Die Erfindung wird nachfolgend in beispielhafter Weise erläutert.

Die Bedieneinheit der elektrischen Anlage ist für den Betreiber zugänglich und versetzt ihn in die Lage, Betriebsparameter einzustellen. Betriebsparameter sind zum Beispiel Steuerungsparameter zur Veränderung der Ansteuerung des Blindleistungskompensators, Regelungsparameter zur Veränderung der Elektrodenregelung und Schaltparameter zur Veränderung der Ansteuerung des Ofenschalters.

Im einfachsten Fall ist als Betätigungselement der Bedieneinheit ein Schieberegler vorgesehen. Der Betreiber hat damit die Möglichkeit, Betriebsparameter zu verändern. Beispielsweise wird das Betriebsverhalten von "träge" nach "schnell" angepasst. Betätigungselemente können mit gleicher Funktionalität auch als Drehknöpfe, Druckknöpfe, Schalter etc. ausgebildet sein.

Eine weitere Möglichkeit sieht vor, dass der Betreiber zwischen maximaler Spannungskonstanz und einem Minimum an Netzstörungen (Flicker) wählt. Die Einstellbarkeit eines Parameters, der beispielsweise die Schaltfrequenz eines in der Anlage angeordneten Umrichters vorgibt, erlaubt die Wahl zwischen einem Schonbetrieb und einem Betrieb mit maximaler Energie. Im Schonbetrieb sinkt die elektrische und/oder mechanische Beanspruchung einzelner Anlagenkomponenten. Eine Beschleunigung eines Schmelzvorgangs wird unter anderem durch eine neue Einstellung der Elektrodenregelung errecht.

Die Beanspruchung der Anlagenkomponenten wie Transformatoren, Blindleistungskompensatoren, Ofenschalter etc. wird durch die Anlagenansteuerung mittels Steuereinheit bestimmt. Eine Veränderung der einstellbaren Betriebsparameter bringt dabei eine Veränderungen der Belastungen mit sich. Einzelne Parameter sind dabei sinnvollerweise in Beziehung zueinander gesetzt, insbesondere wenn deren Veränderungen auf dieselben Anlagenkomponenten wirken.

Mittels der dem Betreiber zugänglichen Betätigungselemente sind die einzelnen Parameterwerte während des Betriebs in engeren Grenzen als bei der Inbetriebsetzung veränderbar. Bei der Inbetriebsetzung ist zur Einstellung eines Anlagenoptimums ein größerer Spielraum erforderlich. Das Inbetriebsetzungspersonal kann die einzelnen Betriebsparameter aus einem jeweils ausreichend großen Parameterbereich auswählen. Sobald ein Optimum für die in Betrieb zu setzende Anlage gefunden ist, erfolgen Parametereinstellungen nur mehr in engen Teilbereichen. Es ist günstig, wenn der jeweilige Einstellbereich, der dem Betreiber zur Verfügung steht, nur etwa 10% des gesamten Einstellbereichs während der Inbetriebsetzung beträgt. Die bei der Inbetriebsetzung gefundenen Einstellungen sind also durch den Betreiber nur minimal veränderbar, sodass weiterhin ein optimierter Betrieb der elektrischen Anlage gegeben ist.

In einer Weiterentwicklung der Erfindung umfasst die elektrische Anlage eine Aufzeichnungseinheit, mittels der die Beanspruchungen einzelner Anlagenkomponenten erfasst werden.

Beispielsweise werden mittels eines PLC (programmable logical controller) zählbare Schaltspiele erfasst. Mittels einer hinterlegten Belastungstabelle oder eines geeigneten Algorithmus werden die mechanischen und/oder elektrischen Beanspruchungen der entsprechenden Schaltelemente bestimmt. In weiterer Folge ist unter Heranziehung bekannter Zusammenhänge ein aktueller Verschleiß abschätzbar und ein Wartungszeitpunkt bestimmbar.

Zudem ist es sinnvoll, den gesamten aktuellen Systemzustand der elektrischen Anlage zu erfassen und zu protokollieren. Zum Beispiel wird die Steuereinheit um einen Datenspeicher erweitert und mit vorhandenen oder ergänzten Sensoren der elektrischen Anlage verbunden. Aufgezeichnet werden eine auf den Ofen wirkende Vibration, die Umgebungstemperatur, die Luftfeuchtigkeit, der Luftdruck, die Staubbelastung, die Zusammensetzung der Ofenatmosphäre etc. Diese physikalischen und chemischen Einflussfaktoren haben Auswirkungen auf die Lebensdauer elektrisch und/oder mechanisch belasteter Anlagenbauteile. So kann beispielsweise elektrisch leitender Staub zu zusätzlichen elektrischen Belastungen führen.

Die durch den Betreiber einstellbaren Betriebsparameter können ebenfalls zu Veränderungen der Belastungen einzelner Anlagenkomponenten führen. Beispielsweise ist ein als Vakuumschalter ausgeführter Ofenschalter mechanischen und elektrischen Belastungen ausgesetzt, die durch eine neue Einstellung maximal zulässiger Schaltzyklen pro Zeiteinheit veränderbar sind. Nach jeder Neueinstellung wird mittels eines in der Steuereinheit hinterlegten Algorithmus unter Einbeziehung der physikalischen und chemischen Einflussfaktoren eine noch verbleibende Lebensdauer des Ofenschalters berechnet.

Konkret werden zum Beispiel mittels der Aufzeichnungseinheit die Betätigungen zumindest eines mechanisch und/oder elektrisch beanspruchten Schaltelements erfasst. Die Betätigungsanzahl dieses Schaltelementes wird durch das Einstellen einzelner Parameter beeinflusst. Nach jeder Neueinstellung dieser Parameter erfolgt eine Neuberechnung der noch verbleibenden Zeit bis zum Ende des aktuellen Wartungsintervalls des Schaltelements.

Günstigerweise umfasst dann die elektrische Anlage eine Wartungsanzeige zur Anzeige der Restdauer bis zur nächsten Wartung eines beanspruchten Anlagenbauteils wie beispielsweise des Ofenschalters. Durch Veränderung einzelner Betriebsparameter mittels Bedieneinheit wird gegenüber bekannten Anlagen ein zusätzlicher Nutzen erzielt. Einerseits kann der Betreiber die aktuelle Betriebsweise der elektrischen Anlage beeinflussen, also zum Beispiel zwischen Schonbetrieb und maximaler Leistung wählen. Andererseits erhält der Betreiber immer eine aktuelle Information über laufende Wartungsintervalle, die durch Neueinstellungen einzelner Betriebsparameter veränderbar sind. Damit erhöht sich die Flexibilität der elektrischen Anlage und der Betreiber hat gegenüber bekannten Ausführungen mehr Handlungsspielraum bezüglich des Betriebs und der Wartung seiner Anlage.

## Patentansprüche

1. Elektrische Anlage eines Lichtbogenofens zum Schmelzen von Metallen, umfassend einen Blindleistungskompensator und eine Steuereinheit zur Ansteuerung des Blindleistungskompensators, wobei zumindest ein Steuerungsparameter innerhalb eines vorgegebenen Steuerungsparameter-Bereichs veränderbar ist, **dadurch gekennzeichnet, dass** für den Steuerungsparameter ein eingeschränkter Steuerungsparameter-Teilbereich vorgegeben ist und die elektrische Anlage eine Bedieneinheit umfasst, mittels welcher der Steuerungsparameter innerhalb des Steuerungsparameter-Teilbereichs einstellbar ist.

2. Elektrische Anlage nach Anspruch 1, **dadurch gekennzeichnet, dass** die Steuereinheit zur Regelung von Elektroden des Lichtbogenofens eingerichtet ist.

3. Elektrische Anlage nach Anspruch 2, **dadurch gekennzeichnet, dass** zumindest ein Regelungsparameter innerhalb eines vorgegebenen Regelungsparameter-Bereichs veränderbar ist und mittels Bedieneinheit innerhalb eines eingeschränkten Regelungsparameter-Teilbereichs einstellbar ist.

4. Elektrische Anlage nach einem der Ansprüche 1 bis 3, **dadurch gekennzeichnet, dass** die Steuereinheit zur Ansteuerung eines Ofenschalters des Lichtbogenofens eingerichtet ist.

5. Elektrische Anlage nach Anspruch 4, **dadurch gekennzeichnet, dass** zumindest ein Schaltparameter innerhalb eines vorgegebenen Schaltparameter-Bereichs veränderbar ist und mittels Bedieneinheit innerhalb eines eingeschränkten Schaltparameter-Teilbereichs einstellbar ist.

6. Elektrische Anlage nach einem der Ansprüche 3 bis 5, **dadurch gekennzeichnet, dass** die Einstellmöglichkeiten der einzelnen Parameter zumindest zum Teil voneinander abhängig sind.

7. Elektrische Anlage nach Anspruch 6, **dadurch gekennzeichnet, dass** die Bedieneinheit einen Schieberegler umfasst, mittels dem die voneinander abhängigen Parameter einstellbar sind.

8. Elektrische Anlage nach Anspruch 6 oder 7, **dadurch gekennzeichnet, dass** die elektrische Anlage eine Anzeigeeinheit umfasst, mittels der eingestellte Werte für einzelne Parameter ablesbar sind.

9. Elektrische Anlage nach einem der Ansprüche 1 bis 8, **dadurch gekennzeichnet, dass** der Teilbereich, in dem der jeweilige Parameter mittels Bedieneinheit einstellbar ist, höchstens 10% des gesamten Parameterbereichs ausmacht.

10. Elektrische Anlage nach einem der Ansprüche 1 bis 9, **dadurch gekennzeichnet, dass** die elektrische Anlage eine Aufzeichnungseinheit umfasst, mittels der mechanische und/oder elektrische Beanspruchungen einzelner Anlagenkomponenten erfassbar sind.

11. Elektrische Anlage nach Anspruch 10, **dadurch gekennzeichnet, dass** die elektrische Anlage eine Wartungsanzeige umfasst, mittels der Wartungsintervalle von mechanisch und/oder elektrisch beanspruchten Anlagenkomponenten in Abhängigkeit von mittels Bedienelement vorgenommenen Parametereinstellungen darstellbar sind.

12. Verfahren zum Betreiben einer elektrischen Anlage nach einem der Ansprüche 10 bis 11, **dadurch gekennzeichnet, dass** mittels der Aufzeichnungseinheit die Belastung zumindest einer mechanisch und/oder elektrisch beanspruchten Anlagenkomponente erfasst wird, dass die Belastung dieser Anlagenkomponente durch das Einstellen einzelner Parameter beeinflusst wird und dass nach jeder Neueinstellung dieser Parameter eine Neuberechnung der noch verbleibenden Zeit bis zum Ende des aktuellen Wartungsintervalls der Anlagenkomponente erfolgt.
